# EUROPEAN PATENT APPLICATION

(11) **EP 4 510 707 A1**
(43) Date of publication of application: **19.02.2025**
(21) Application number: 23807927.1
(22) Date of filing: 18.05.2023
(51) Int. Cl.: H04W 48/02, H04W 8/26, H04W 60/00, H04W 68/02

(54) **METHOD AND APPARATUS FOR PROCESSING IN OPERATOR NETWORK BY DETECTING ABNORMAL BEHAVIOR OF UE**

(30) Priority: 19.05.2022 KR 20220061644
(71) Applicant: Samsung Electronics Co., Ltd., Suwon-si, Gyeonggi-do 16677 (KR)
(72) Inventor: KANG, Sujung, Suwon-si, Gyeonggi-do 16677 (KR); YOON, Kangjin, Suwon-si, Gyeonggi-do 16677 (KR); LEE, Duckey, Suwon-si, Gyeonggi-do 16677 (KR)
(74) Representative: Gulde & Partner
(86) International application number: PCT/KR2023/006772
(87) International publication number: WO 2023/224408

(57) **Abstract**

The present disclosure relates to: a 5G communication technique for supporting a higher data transmission rate than a 4G system; and a system therefor. The present disclosure relates to a method by which, when UE accesses a network, an access management function (AMF) verifies whether or not the access is duplicated access from the UE to determine whether or not to allow the UE to access the network, and comprises the steps of: before the AMF allows corresponding UE to access the network, the AMF combining a newly accessing UE ID and auxiliary indicators to determine whether or not it is duplicated access from the UE; on the basis of the result of the determination, transmitting paging to a location that has been previously accessed from the UE; determining a response value of the UE to the transmission of paging, and the AMF/NWDAF determining whether or not the newly accessing UE ID is duplicated; when a duplicated UE ID value is derived, controlling access from the corresponding UE and UE that has accessed a previous location, via whether or not new access or existing access applied to a PCF has been allowed.

## Description

### [Technical Field]

The present disclosure is directed to providing a method and apparatus for detecting access of UEs with a same subscriber authentication ID in a wireless communication system, and to providing a method and apparatus for controlling access of UEs with a same subscriber authentication ID to an operator network accordingly.

### [Background Art]

5G mobile communication technologies define broad frequency bands such that high transmission rates and new services are possible, and can be implemented not only in "Sub 6 GHz" bands such as 3.5 GHz, but also in ultra-high frequency bands, "Above 6 GHz" bands referred to as mmWave such as 28 GHz and 39 GHz. In addition, it has been considered to implement 6G mobile communication technologies (referred to as Beyond 5G systems) in terahertz bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra reliable low latency communications (URLLC), and massive machine-type communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR). There also has been ongoing standardization in system architecture/service regarding a 5G baseline architecture (for example, service based architecture or service based interface) for combining network functions virtualization (NFV) and software-defined networking (SDN) technologies, and mobile edge computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended reality (XR) for efficiently supporting augmented reality (AR), VR virtual reality (VR), mixed reality (MR) and the like, 5G performance improvement and complexity reduction by utilizing artificial intelligence (AI) and machine learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as full dimensional MIMO (FD-MIMO), array antennas and large-scale antennas, metamaterial-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of 6G mobile communication technologies and improving system networks, AI-based communication technology for implementing system optimization by utilizing satellites and artificial intelligence (AI) from the design stage and internalizing end-to-end AI support functions, and next-generation distributed computing technology for implementing services at levels of complexity exceeding the limit of LTE operation capability by utilizing ultra-high-performance communication and computing resources.

A universal integrated circuit card (UICC) is a smart card inserted into a mobile communication terminal and is referred to as a UICC card. The UICC may include an access control module for accessing the network of a mobile communication operator. Examples of the access control module include a universal subscriber identity module (USIM), a subscriber identity module (SIM) and an IP multimedia service identity module (ISIM). A UICC including the USIM may be generally referred to as a USIM card. Likewise, in general, a UICC including the subscriber identity module (SIM) module may be referred to as a SIM card. In the subsequent description of the present disclosure, the SIM card may be used as a general meaning including a UICC card, a USIM card and a UICC including ISIM. That is, the technical application of the SIM card may be identically applied to a USIM card or an ISIM card or a general UICC card.

The SIM card may store personal information of a mobile communication subscriber and performs generating subscriber authentication and traffic security key when a mobile communication network is accessed, enabling safe mobile communication use.

The SIM card may be manufactured as a dedicated card for a specific mobile communication operator at the request of the corresponding operator, generally when the card is manufactured. Authentication information for accessing the network of a corresponding operator, for example, a universal subscriber identity module (USIM) application, an international mobile subscriber identity (IMSI), a K value, and an OPC value are previously mounted on the SIM card. Accordingly, the manufactured SIM card is delivered to a corresponding mobile communication operator and provided to a subscriber. Thereafter, if necessary, management, such as the installation, modification and deletion of an application within the UICC, may be performed using a technology, such as over the air (OTA). A subscriber may insert the UICC card into his or her mobile communication terminal and use the network of a corresponding mobile communication operator and application services. When the terminal is to be replaced with another one, the subscriber transfers the UICC card from the existing terminal to a new terminal. Accordingly, authentication information, mobile communication telephone numbers and a personal telephone directory stored in the UICC card may be used in the new terminal without any change.

Subscriber identification information may be identified in an operator network as authentication information for accessing to the network of a corresponding operator. The subscriber identification information of UE may be an identification information that distinguishes an IMSI or a subscriber generated from an IMSI. Further, in addition to the subscriber identification information, a unique ID of UE, e.g., IMEI, may be further obtained in an operator network as identification information for the UE itself and used as supplementary information for authentication for network access. In 3GPP, subscriber identification information for network access is generally referred to as a UE ID, and in 5G, the UE ID may be either a subscription permanent identifier (SUPI) (IMSI in LTE) or a subscription concealed identifier (SUCI), and a value of the SUPI may be an IMSI. Meanwhile, the identification information on UE itself to identify the UE in a network is called a permanent equipment identifier (PEI) in 5G, and a value of the PEI generally has an international mobile equipment identity (IMEI). In the network, the determination of whether to allow network access is made through subscriber authentication information. When UE is unable to provide subscriber authentication information to the network (e.g., sim card failure, emergency call while out of the network of a specific operator), the UE may be determined to be unauthenticated UE and network access may be allowed using the identification information of the UE itself in the network. In the present disclosure, unless explicitly stated otherwise, a UE ID refers to information that allows the identification of a subscriber in a network and will be limited to SUPI for the purposes of description herein, but SUCI may also be used. Meanwhile, SUPI or IMSI may be used interchangeably in the following descriptions.

Currently, in 3GPP Rel-17, UE is allowed to have one or more subscriber identification information, i.e., multiple SIM cards, whereas, prior to this, the standard assumed that only one SIM card is present in the UE. With the consideration of multiple SIM cards, in 3GPP, a method was introduced to provide a paging cause for a paging message transmitted from a network to UE. Meanwhile, currently, when UE accesses an operator network for network services, according to 3GPP standards, it is not assumed that UEs with a same UE ID are accessed in the operator network. Accordingly, no method is defined to detect UEs that actually have a same UE ID and control access of corresponding UEs.

### [Disclosure of Invention]

### [Technical Problem]

In case in which UE currently accesses an operator network for network services, and access from UE with a same UE ID is detected in the operator network, the present disclosure is directed to providing a method and apparatus for processing this case in the operator network, thereby preventing potential user harm in advance. When UE accesses a network, an access management function (AMF) does not determine whether access from the UE is abnormal, and after determining abnormal access, verifies whether the access is duplicated access from the UE to determine whether to allow the UE to access the network, which is currently not in place. Therefore, the present disclosure is intended to address this issue.

### [Solution to Problem]

In order to solve the problems as described above, the present disclosure is directed to providing a method comprising: determining, upon receiving network access from UE in a wireless communication system, whether the network access is duplicated access from the UE by combining a newly accessed UE ID and auxiliary indicators in an AMF prior to the AMF allowing network access for the corresponding UE; transmitting paging to a base station located in a cell or tracking area ID previously accessed by the UE on the basis of a result of the corresponding determination; determining a response value of the UE to the paging transmission to determine whether the newly accessed UE ID is duplicated in AMF/NWDAF; controlling access through whether new access or existing access applied to the PCF has been allowed when a duplicated UE ID value is derived.

In order to solve the problem as described above, the present disclosure may include transmitting, in a wireless communication system, an auxiliary indicator in addition to a UE ID when second UE requests access to a network; and receiving, from a base station/AMF, a message of allowing, withholding, or rejecting network access as a result of determination with reference to the corresponding provided UE ID and the auxiliary indicator.

In order to solve the problems as described above, the present disclosure may include receiving, by first UE, paging from a base station and replying to the paging, in a wireless communication system.

In order to solve the problems as described above, the present disclosure is directed to providing a method performed in an access management function (AMF) in a wireless communication system, the method including: receiving, from second UE, a registration request including a subscription permanent identifier (SUPI); transmitting, to first UE, a paging message related to the SUPI, the first UE being UE having the SUPI; receiving, from the first UE, a response message to the paging message; determining whether to allow access for the second UE; transmitting, to the second UE, a registration rejection message on the basis of the determination; and blocking the second UE from accessing.

According to an embodiment, the paging message may include information related to a paging cause.

According to an embodiment, the determining whether to allow access for the second UE is analyzing whether to allow abnormal access for the second UE on the basis of information obtained through a network function (NF) by a network data analytics function (NWDAF), and receiving the determination through a policy and control function (PCF) on the basis of a result of the analysis.

In addition, in another embodiment of the present invention, there is provided a method performed in first UE in a wireless communication system, the method including: receiving a paging message from an access management function (AMF),
the first UE being UE with a subscription permanent identifier (SUPI); and transmitting, to the AMF, a response message to the paging message, in which a registration request including the SUPI may be transmitted from second UE to the AMF, a determination may be made whether to allow access for the second UE on the basis of the response message, a registration rejection message may be transmitted from the AMF to the second UE on the basis of the determination, and access from the second UE may be blocked.

In addition, in still another embodiment of the present invention, there is provided a method performed in second UE in a wireless communication system, the method including: transmitting, to an access management function (AMF), a network registration request including a subscription permanent identifier (SUPI); and receiving, from the AMF, a registration rejection message, in which a paging message related to the SUPI may be transmitted from the AMF to first UE, the first UE being UE with the SUPI, a response message for the paging message may be transmitted from the first UE to the AMF, a determination may be made on whether to allow access for the second UE on the basis of the response message, and access from the second UE may be blocked on the basis of the registration rejection message.

In addition, in still another embodiment of the present invention, there is provided an access management function (AMF), the AMF including: a transceiver configured to be capable of transmitting and receiving at least one signal; and a controller coupled to the transceiver, in which the controller may be configured to receive, from second UE, a registration request including a subscription permanent identifier (SUPI), transmit, to first UE, a paging message related to the SUPI, the first UE being UE with the SUPI, receive, from the first UE, a response message for the paging message, determine whether to allow access for the second UE, transmit, to the second UE, a registration rejection message on the basis of the determination, and blocks access from the second UE.

In addition, in still another embodiment of the present invention, there is provided first UE, the first UE including: a transceiver configured to be capable of transmitting and receiving at least one signal; and a controller coupled to the transceiver, in which the controller may receive, from an access management function (AMF), a paging message, the first UE being UE with a subscription permanent identifier (SUPI), transmit, to the AMF, a response message for the paging message, and transmit a registration request including the SUPI from the second UE to the AMF, in which a determination may be made on whether to allow access for the second UE on the basis of the response message, a registration rejection message may be transmitted from the AMF to the second UE on the basis of the determination, and access from the second UE may be blocked.

In addition, in yet another embodiment of the present invention, there is provided second UE, the second UE including: a transceiver configured to be capable of transmitting and receiving at least one signal; and a controller coupled to the transceiver, in which the controller may transmit, to an access management function (AMF), a network registration request including a subscription permanent identifier (SUPI), receive, from the AMF, a registration rejection message, transmits a paging message related to the SUPI from the AMF to first UE, the first UE being UE with the SUPI, and transmit a response message for the paging message from the first UE to the AMF, in which a determination may be made on whether to allow access for the second UE on the basis of the response message, and access from the second UE may be blocked on the basis of the registration rejection message.

### [Advantageous Effects of Invention]

According to an embodiment of the present disclosure, there is provided a method and apparatus for recognizing abnormal access from UE in an operator network and further verifying and processing whether the access is from the same UE, thereby preventing user harm from SIM card duplication damage due to mismanagement of SIM information or physical duplication of SIM cards. That is, SIM duplication may occur by extracting IMSI and K values using physical tools from the SIM card or by a method of manufacturing the same SIM card due to insider's poor SIM management. In particular, since accidents due to insider's poor SIM management may also occur, even if SIM duplication occurs due to poor SIM management, the SIM duplication can be detected through a procedure to further verify that an abnormal access occurs in the operator network in a standardized manner, and access can be controlled accordingly.

### [Brief Description of Drawings]

FIG. 1 is a view illustrating a network structure for a 5G system according to an embodiment of the present disclosure.
FIG. 2 is a view schematically illustrating a procedure for determining whether there is UE with a same UE ID, detecting the UE, and determining whether to allow an access for the UE, according to an embodiment of the present disclosure.
FIG. 3 is a view specifically illustrating one of a procedure for processing an operation required by PCF/NWDAF by detecting an abnormal operation of the UE in FIG. 2.
FIG. 4 is a view illustrating a method of detecting and processing the presence of UE with a same UE ID in a roaming situation in a network, according to an embodiment of the present disclosure.
FIG. 5 is a view schematically illustrating an internal structure of UE in a wireless communication system according to an embodiment of the present disclosure.
FIG. 6 is a view illustrating a structure of a network entity performing network functions according to an embodiment of the present disclosure.

### [Mode for the Invention]

Hereinafter, the principles of operation of the present disclosure will be described in detail with reference to the accompanying drawings. In describing of the present disclosure below, the specific descriptions of publicly known related functions or configurations will be omitted when it is determined that the specific descriptions may unnecessarily obscure the subject matter of the present disclosure. In addition, the terms used herein are defined considering the functions in the present disclosure and may vary depending on the intention or usual practice of a user or an operator. Therefore, the definition of the present disclosure should be made based on the entire contents of the present specification. Similarly, in the accompanying drawings, some constituent elements are illustrated in an exaggerated or schematic form or are omitted. In addition, a size of each constituent element does not entirely reflect an actual size. Like reference numerals designate like or corresponding constituent elements in the drawings. Advantages and features of the technical spirit according to the present disclosure and methods of achieving the advantages and features will be clear with reference to exemplary embodiments described in detail below together with the accompanying drawings. However, the present disclosure is not limited to the exemplary embodiments disclosed herein but will be implemented in various forms. The exemplary embodiments of the present disclosure are provided so that the present disclosure is completely disclosed, and a person with ordinary skill in the art can fully understand the scope of the present disclosure. The present disclosure will be defined only by the scope of the appended claims. Throughout the specification, the same reference numerals denote the same constituent elements. In addition, in the description of the present disclosure, the specific descriptions of related functions or configurations will be omitted when it is determined that the specific descriptions may unnecessarily obscure the subject matter of the technical spirit according to the present disclosure. In addition, the terms used herein are defined considering the functions in the present disclosure and may vary depending on the intention or usual practice of a user or an operator. Therefore, the definition of the present disclosure should be made based on the entire contents of the present specification.

Hereinafter, a base station is an entity that performs resource allocation of UEs, and may be at least one of gNode B, eNode B, Node B, a base station (BS), a wireless access unit, a base station controller, or a node on the network. A terminal may include user equipment (UE), a mobile station (MS), a cellular phone, a smartphone, a computer, or a multimedia system capable of performing communication functions. In the present disclosure, a downlink (DL) is a wireless transmission path of a signal transmitted by a base station to UE, and an uplink (UL) is a wireless transmission path of a signal transmitted by UE to a base station. In addition, while an LTE or LTE-A system may be described below as an example, embodiments of the present disclosure may be applied to other communication systems having similar technical backgrounds or channel types. For example, 5G mobile communication technologies (5G, new radio, NR) that are developed as post-LTE-A may be included in a system to which the embodiments of the present disclosure, and 5G below may be a concept that includes existing LTE, LTE-A, and other similar services. In addition, the present disclosure may be applied to other communication systems with some modifications without substantially departing from the scope of the present disclosure as determined by those skilled in the art. In this case, it will be understood that each block of processing flowchart illustrations and combination of flowchart illustrations may be performed by computer program instructions.

These computer program instructions may be incorporated into a processor of a general purpose computer, a special purpose computer, or other programmable data processing equipment, such that the instructions executed by the processor of the computer or other programmable data processing equipment create means for performing the functions described in the flowchart block(s). These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that performs the function described in the flowchart block(s). The computer program instructions may also be loaded onto a computer or other programmable data processing apparatus to cause a series of operational steps to be performed on the computer or other programmable apparatus to produce a computer implemented process such that the instructions that execute on the computer or other programmable apparatus may provide steps for implementing the functions described in the flowchart block(s).

In addition, each block may represent a module, segment, or portion of code that includes one or more executable instructions for executing a specified logical function(s). Additionally, it should be noted that it is possible for the functions mentioned in the blocks to occur out of order in some alternative execution examples. For example, two blocks illustrated in succession may in fact be performed substantially simultaneously, or the blocks may sometimes be performed in reverse order, depending on the corresponding function. In this case, as used herein, the term 'unit', 'part', or 'portion' means software or a hardware constituent element, such as a field programmable gate array (FPGA) or an application specific integrated circuit (ASIC), where the term 'unit', 'part', or 'portion' performs some role. However, the term 'unit', 'part', or 'portion' is not limited to software or hardware. The term 'unit', 'part', or 'portion' may be configured to be in an addressable storage medium or configured to reproduce one or more processors. Thus, as an example, the term 'unit', 'part', or 'portion' includes constituent elements such as software constituent elements, object-oriented software constituent elements, class constituent elements, and task components, processes, functions, properties, procedures, subroutines, segments of program codes, drivers, firmware, microcode, circuitry, data, database, data structures, tables, arrays, and variables. The functions provided in the constituent elements and the term, 'units', 'parts', or 'portions' may be combined into a smaller number of constituent elements, 'units', 'parts', and 'portions' and/or divided into additional constituent elements, 'units', 'parts', and 'portions'. In addition, the constituent elements and 'units', 'parts', and 'portions' may be implemented to execute one or more CPUs within a device or secure multimedia card. In addition, in embodiments, the term, 'units', 'parts', or 'portions' may include one or more processors.

First, the terms used in the present specification may be defined.

In the present specification, a UICC is a smart card inserted into a mobile communication terminal, which refers to a chip that stores personal information such as network access authentication information, a phone address book, and a short message service (SMS) of a mobile communication subscriber and perform functions of authenticating a user and generating a traffic security key when the subscriber accesses a mobile communication network such as global system for mobile communications (GSM), wideband code division multiple access (WCDMA), or long term evolution (LTE), thereby allowing the user to use stable mobile communication. The UICC has a communication application such as a subscriber identification module (SIM), a universal SIM (USIM), or an Internet protocol (IP) multimedia SIM (ISIM) according to the type of a mobile communication network which the subscriber accesses, and also provides a high level security function to have various applications such as an electronic wallet, ticketing, and an electronic passport.

In the present specification, the term UICC is interchangeably used with the terms SIM, eUICC, eSIM, and SIM card.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device. In addition, in the present specification, in the description of an interface between UE and a card, the UE may be used interchangeably with a modem as a message transmitter that transmits messages to transmit and receive commands to the card.

In the present specification, the UE or device may include software or applications installed within the UE or device to control UICC or eUICC. The software or applications may be referred to, for example, as a local profile assistant (LPA). In the present specification, an eUICC identifier (eUICC ID) may be a unique identifier of the eUICC embedded in the terminal and may be described as an EID. In the present specification, an authentication and key agreement (AKA) may represent an authentication algorithm for accessing a 3rd generation partnership project (3GPP) and 3GPP2 network. K is an encryption key value stored in the eUICC which is used for the AKA authentication algorithm, and in the present specification, OPC is a parameter value which may be stored in the eUICC which is used for the AKA authentication algorithm.

In the present specification, a network access application program (NAA) may be application programs such as USIM and ISIM which are stored in the UICC for accessing a network. The NAA may be a network access module.

As used herein, the terms end user, user, subscriber, service subscriber, and user may be used interchangeably to refer to a user of corresponding UE.

Technical problems to be solved by the present disclosure are not limited to the above-mentioned technical problems, and other technical problems, which are not mentioned above, may be clearly understood from the following descriptions by those skilled in the art to which the present disclosure pertains.

Further, in the description of the present disclosure, the specific descriptions of related functions or configurations will be omitted when it is determined that the specific descriptions may unnecessarily obscure the subject matter of the present disclosure.

Hereinafter, proposed embodiments will be described with reference to the drawings.

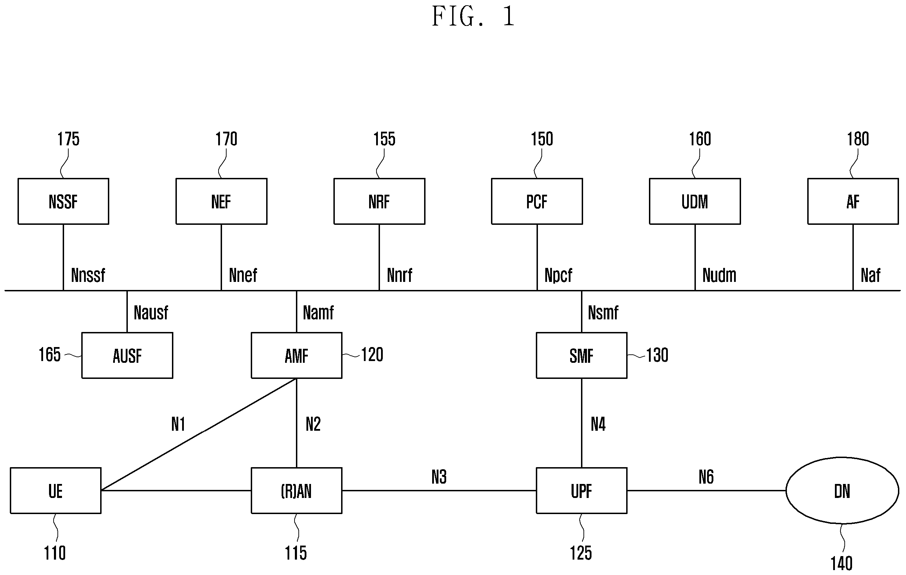

A unit performing each of functions provided by a 5G network system may be defined as a network function (NF). An example of the structure of a 5G mobile network is illustrated in FIG. 1.

FIG. 1 is a view illustrating a network structure for a 5G system according to an embodiment of the present disclosure.

The network structure of FIG. 1 may refer to the standards (e.g., TS 23.501, TS 23.502, TS 23.503, TS 23.288, etc.) defined by the international telecommunication union (ITU) or 3GPP, and each of the constituent elements included in the network structure of FIG. 1 may refer to a physical entity or to software that performs an individual function or hardware combined with software. Reference numerals denoted by Nx in FIG. 1 , such as N1, N2, N3, ... , etc., indicate known interfaces between network functions (NFs) in the 5GC, and the relevant descriptions may be referred to the standard specifications (TS 23.501). Therefore, a detailed description will be omitted.

With reference to FIG. 1 , the network structure may include at least one of an access and mobility management function (AMF) 120 for managing network access and mobility of user equipment (UE) 110, a session management function (SMF) 130 for performing session-related functions for the UE 110, a user plane function (UPF) 125 that is in charge of transferring user data and being controlled by the SMF 130, an application function (AF) 180 that communicates with 5GC to provide application services, a network exposure function (NEF) 170 that supports communication with the AF 180, unified data management (UDM) 160 and unified data repository (UDR) (not shown) for data storage and management, a policy and control function (PCF) 150 for managing policies, or a data network (DN) 140 (e.g., Internet) where user data is transferred. The UDR may store the subscription information on the UE 110 and may provide the UDM 160 with the subscription information on the UE 110. Further, the UDR may store operator policy information and may provide the operator policy information to the PCF 150.

In addition to the above-described NFs, there may be an operation, administration, and management (OAM) server (not illustrated) that is a system for managing the UE 110 and the 5G mobile communication network. In addition, there may further be a network data analytics function (NWDAF) in charge of the data analysis function of the 5G mobile communication network in addition to the NF, etc. described above. Although not illustrated in detail in the drawings, the NWDAF is one NF that may be added to the drawings and may interact with AMF, SMF, PCF, UDM (obtaining information stored in the UDR through the UDM), AF (directly or via NEF), OAM, etc. to collect and provide events provided by corresponding NFs to NFs that desire to use the events, e.g., AMF 120, PCF 150, etc. A detailed description of the NWDAF may be referred to TS 23.288. Further, the 5G network system may further include a RAN (e.g., a base station such as a gNB) 115, an authentication server function (AUSF) 165, a network slice selection function (NSSF) 175, and a network repository function (NRF) 155. For the convenience of the following description, network entities operating according to the embodiments of the present disclosure will be referred to using the names of network functions (NFs) (e.g., AMF, UPF, SMF, PCF, UDM, NWDAF, etc.). However, the embodiments of the present disclosure may be likewise applied even when the NF is actually implemented as an instance (e.g., an AMF instance, UPF instance, SMF instance, PCF instance, UDM instance, etc., respectively). Meanwhile, in the following description of the drawings, the network functions may be a single or plurality of sets.

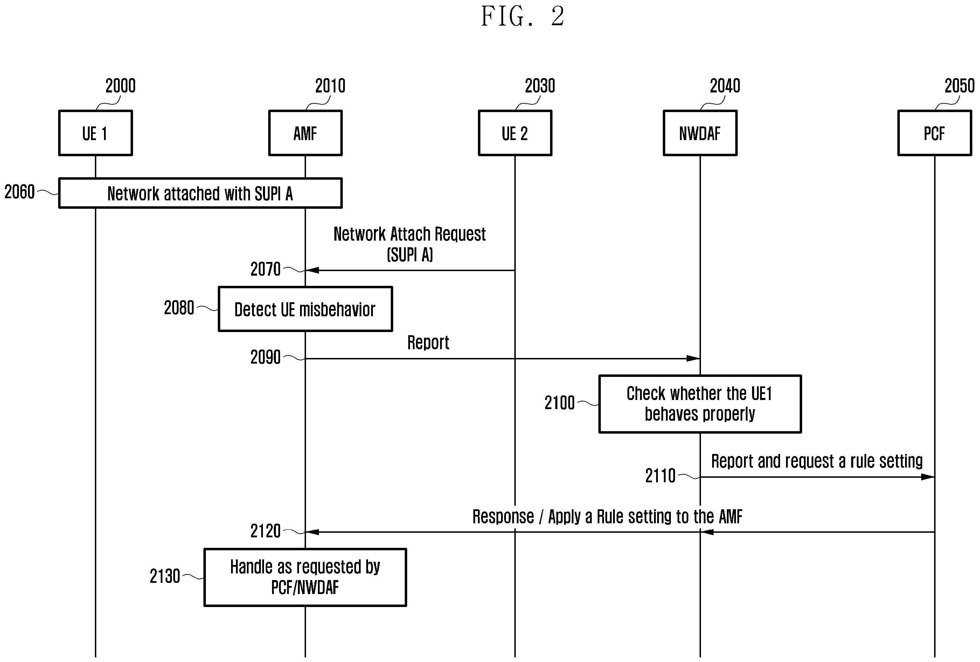

FIG. 2 is a view schematically illustrating a procedure for judging whether there is UE with a same UE ID, detecting the UE, and determining whether to allow access for the UE, according to an embodiment of the present disclosure.

With reference to TS 23.501, UE2 2030 may request a registration request (i.e. a network attach request) to a network to access the operator network (step 2060). UE may transmit a subscription permanent identifier (SUPI) as subscriber authentication information while requesting a registration request, and additionally transmit a permanent equipment identifier (PEI) value, e.g. IMEI, as an ID of the UE.

Before an AMF 2010 receives a network attach request according to step 2070 from the UE2 2030, at a specific occasion, another UE (UE1 2000) may have processed an access to the network with the same SUPI value (i.e., SUPI A) as a SUPI value (i.e., SUPI A) transmitted by the UE2 2030 in step 2070, or the UE1 2000 with the corresponding SUPI value (i.e., SUPI A) may be in a state of a connected mode (CM-CONNECTED) or a dormant mode (CM_IDLE) in the AMF 2010. In step 2080, the AMF 2010 may detect and process a procedure to determine an abnormal operation of UE with reference to predetermined information collected from the UE that maps with SUPI, on the basis of access management information set in the AMF 2010, prior to allowing access from the UE 2 2030 that requested access through step 2070. Alternatively, the AMF 2010 may report this to the NWDAF 2040 to further determine whether the UE undergoes an abnormal operation or to a PCF 2050 to identify and process operator policies according to the abnormal operation (step 2090). When a request is made by the AMF 2010 (step 2090), the NWDAF 2040 may provide analysis information obtained through the NF (e.g., mobility information on the UEs, etc.) to the AMF 2010 to further determine whether the access from UE2 is an abnormal behavior of the UE1 (step 2100) and provide the determination to the AMF 2010 and the PCF 2050 (steps 2110 and 2120). The PCF 2050 may set a policy according to the abnormal operation of the UE with the corresponding SUPI value (e.g., resetting an access radius for the UE1 2000, temporarily blocking network access from the UE2 2030, etc.) with reference to a message received from the NWDAF 2040 in step 2110. The AMF 2010 may obtain the policy for processing from the PCF 2050 via the NWDAF 2040 (step 2120), or may obtain the policy directly from the PCF 2050 without going through the AMF 2010 (not illustrated). As described above, the AMF 2010 may perform processing according to the UE abnormal behavior on the basis of the access management information set in the AMF 2010 or additional information obtained from the NWDAF 2040 and/or the PCF 2050 (step 2130). Methods by which the AMF 2010 detects and processes the abnormal behavior of UEs (step 2030) may be one of the following. For example, when a user has requested to map a specific IMEI to a SUPI value, the AMF 2010 may identify an IMEI of UE that is intended to access the network with a corresponding SUPI, regardless of whether the UE is in a connected mode (CM-CONNECTED) state or not. The AMF 2010 may block access of the corresponding UE2 2030 when an IMEI of UE (e.g., the UE2 2030) intended to access the network with the corresponding SUPI is different from management information on a user (e.g., a user of UE1 2000) that an operator has (e.g., information identified through UDM). That is, the AMF 2010 may also request the IMEI of the UE2 2030 from the UE2 2030 that is intended to access the network with the corresponding SUPI, and may block access from the UE2 2030 when the IMEI of the UE2 2030 is different from an IMEI mapped to the corresponding SUPI identified through the UDM of the operator. Meanwhile, the state of the UE is divided into a dormant mode (CM_IDLE) state and a connected mode (CM-CONNECTED) state, according to whether the UE is connected to the AMF. Accordingly, the AMF does not recognize a location of UE in the dormant mode state. Therefore, when the AMF is intended to transition the corresponding UE from the dormant mode state to the connected mode state, the AMF may process such that the UE may transition to a state in which the UE may perform a connection to the network through a base station at which the UE is currently located by processing paging messages to be transmitted to the base stations determined according to information last reported by the corresponding UE to identify whether there is a paging message that the UE sends to the corresponding UE from the network.

When the UE1 2000 is in the connected mode (CM-CONNECTED) state, the AMF 2010 may maintain a previous connection to the UE1 2000 and block a new connection to the UE2 2030 since the AMF 2010 already detects the UE1 2000 in the connected mode (CM-CONNECTED) state.

When the UE1 2000 is in the dormant mode (CM _IDLE) state at an occasion of access from the UE2 2030, the AMF 2010 may transmit paging to a cell ID or tracking area identifier (TAI) where it is determined that the previous UE, i.e., the UE1 2000, is present, and determine whether to block access for a new connection of the UE2 2030 with reference to whether there is a response of reply to the corresponding paging. For example, when UE with SUPI A (e.g., the UE2 2030) is accessed from a new location, and transmits paging to a location previously accessed by UE with SUPI A (e.g., UE1 2000), it may be expected that the UE with SUPI A (e.g., the UE2 2030) will not send back a response. When receiving a connection response from UE with SUPI A (e.g., the UE1 2000), the AMF 2010 may determine this as an abnormal behavior of the UE and block access of new connection.

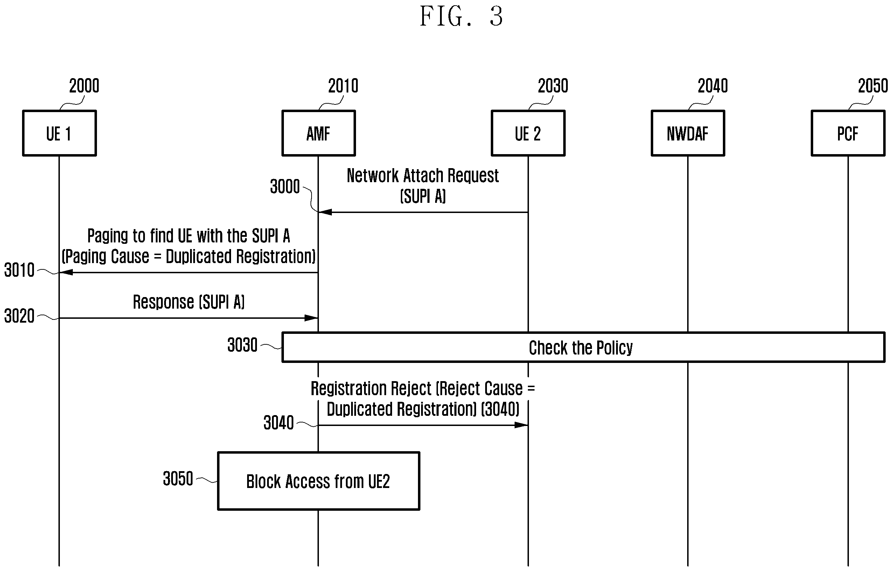

Meanwhile, it is also possible that there is no response from the UE to paging in the dormant mode (CM _IDLE) state. This may be in a state in which, for example, the UE1 2000 is no longer present in the corresponding Cell ID or TAI, or in a state in which the UE1 2000 is in a powered-off state and is unable to respond to paging transmitted by the base station to the corresponding UE. In this case, the AMF 2010 may not immediately allow the connection of the UE2 2030 even if there is no response, and identify whether there is an auxiliary indicator that may determine the UE to be abnormally operating through information collected on the UE2 2030. This may be obtained and determined by the AMF on its own or through conjunction with relevant NFs such as NWDAF/UDM. Alternatively, the grounds for determining the abnormal operation through the auxiliary indicator may be obtained through the PCF 2050, which has been previously collected through the corresponding AMF/NWDAF and set by an operator, and determined to meet a corresponding condition. When the access from the UE2 2030 is detected as an abnormal access through the corresponding auxiliary indicator, the AMF 2010 may block new access from the UE2 2030, for example, new access from a location beyond a general behavior radius of the UE1 2000, new access from a new TAI within a too short period of time, and the like. When there is no corresponding auxiliary indicator, the AMF 2010 may allow new access from the UE2 2030. The AMF 2010 may reply to the UE2 2030 with a result on network registration, depending on a selected method (not illustrated). Meanwhile, a procedure by which the AMF 2010 transmits paging to the previous UE1 2000 and determines whether to allow UE2 2030 access as a result of the paging will be further described in FIG. 3.

FIG. 3 is a view specifically illustrating one of a procedure for processing an operation required by PCF/NWDAF by detecting an abnormal operation of the UE in FIG. 2.

As described above in FIG. 2, when the UE2 2030 requests a registration request (e.g., a network attach request) to the network (step 3000), the AMF 2010 may detect an abnormal operation of the corresponding UE2 2030 and determine whether to allow the UE2 2030 access prior to allowing the request. The AMF 2010, as the grounds for the determination for the corresponding determination, may request that a base station to which the UE1 2000 belongs transmit a paging message to the cell ID or TAI where the UE1 2000 is located, in order to detect UE with SUPI A (i.e., UE2 2030). The base station related to the corresponding cell ID or TAI may transmit a paging message (step 3010). The paging massage transmitted may be transmitted with identification information explicitly included to indicate that the grounds for transmitting the paging are to detect whether duplicated network registrations are present, or may be transmitted without explicit paging cause indication requesting the paging message. An example of explicit identification information may be in the form of paging cause = duplicate Registration, as shown in Table 1 below.

Table 1 is an example of a paging message.

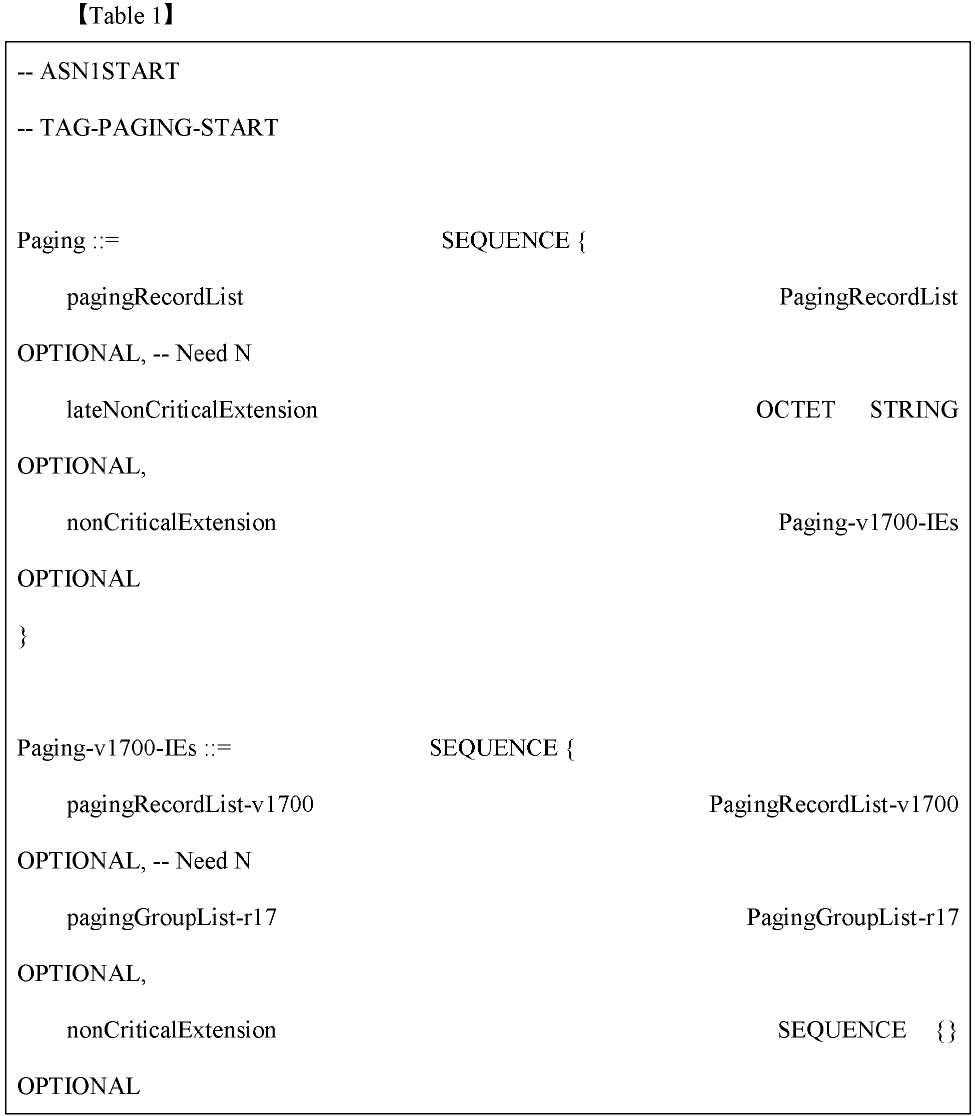

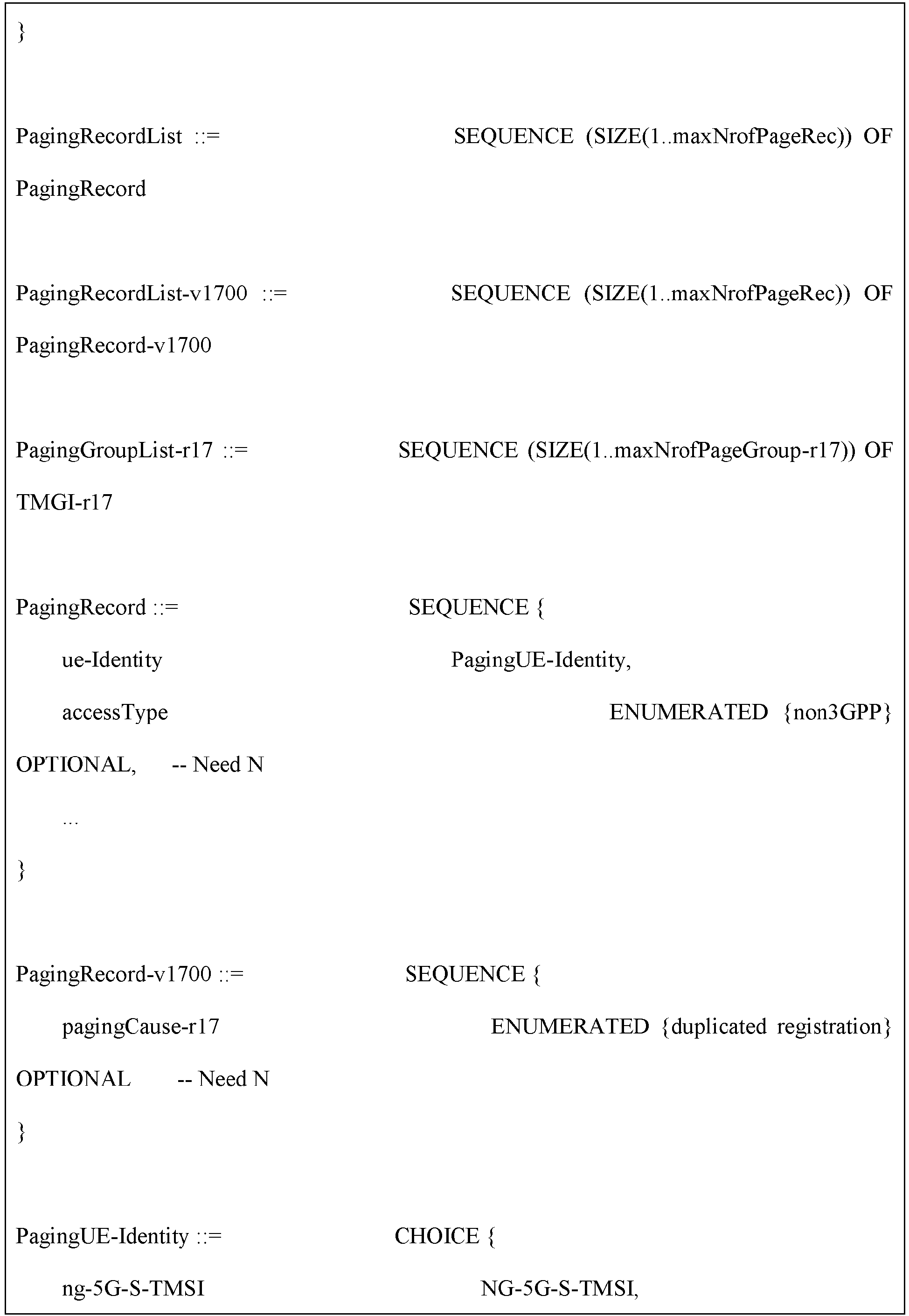

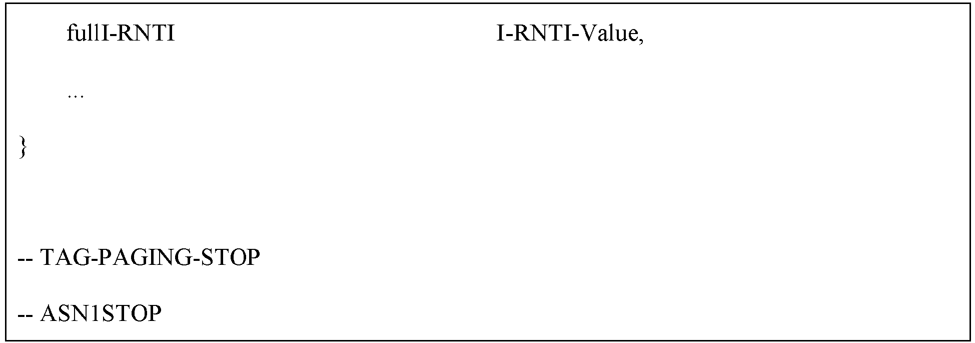

Meanwhile, when there is UE with a same SUPI A value at a location where the paging is received, the UE1 2000 may send back a response message for the corresponding paging. In this case, the AMF 2010 connected to the base station that received the response message from the UE1 2000 may further combine the predetermined information as described above in FIG. 2 to perform a procedure to determine whether to allow access from the UE2 2030 (step 3030). Step 3030 may include detecting a duplicated registration of UEs with the same SUPI A (i.e., UE1 2000 and UE2 2030), reporting the duplicated registration to the PCF 2050 and further to the NWDAF 2040, and, in addition, identifying the operator's policy for the corresponding case through the PCF 2050 to determine how to proceed thereafter. When the AMF 2010 rejects access from the UE2 2030 in accordance with the policies of the NWDAF 2040 or PCF 2050, the AMF 2010 may send back a response message (i.e., a registration reject) to an access request from the UE2 2030. The corresponding response message may be sent back 3040 with information indicating that the corresponding SUPI A is already registered in the network as a reject cause further added. The UE2 2030 that has received the corresponding message may identify the reject cause and configure a user screen for the grounds for rejection to provide a way for a UE user to identify the grounds for rejection of access and take further action (such as contacting the operator). Meanwhile, an occasion at which the AMF 2010 rejects access from the UE2 2030 in accordance with the policies of the NWDAF 2040 or the PCF 2050 may be before or after an occasion at which the AMF 2010 transmits a reject message (step 3040). Meanwhile, although not illustrated in the drawings, when the duplicated registration of UEs is selectively allowed on the basis of the policy of the PCF 2050, a core network may transmit an operator message to the UE1 2000 and/or the UE2 2030 requesting user consent for the duplicated registration of UEs, thereby configuring and providing a screen on the UE for the user to determine whether to allow the duplicated registration. In this case, when further receiving a consent message to allow duplicated registration through the UE1 2000 or UE2 2030 or the UE1 2000 and UE2 2030 that received the operator message, the core network may provide for the allowance of access from the UE2 2030.

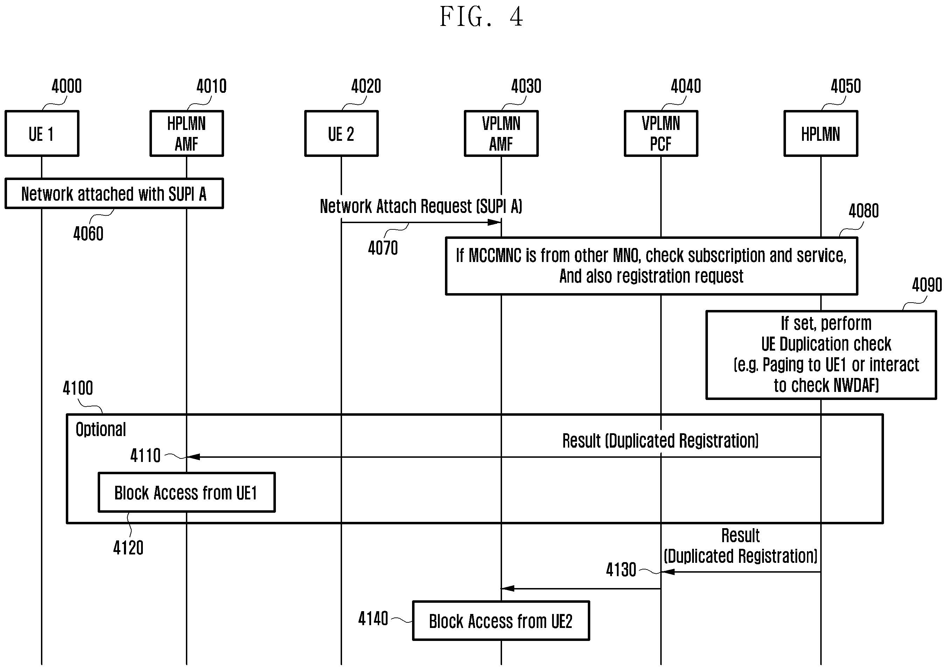

FIG. 4 is a view illustrating a method of detecting and processing the presence of UE with a same UE ID in a roaming situation in a network, according to an embodiment of the present disclosure.

When UE2 4020 requests network access with information on SUPI A included (step 4070), an AMF 4030 of a roaming operator may recognize that there is a roaming situation when a mobile country code (MCC) and an operator code (MNC) are different with reference to the information on SUPI A of the accessed UE2 4020. An IMSI, defined as a SUPI value, consists of an MCC, an MNC, and a mobile subscription identification number (MSIN) that is given to each subscriber. The AMF 4030 of a visited public land mobile network (VPLMN) may identify to an HPLMN 4050 whether the HPLMN 4050 may allow access from the UE2 4020 subscribed to a corresponding another operator prior to allowing network access from the UE2 4020. This may be identified through a PCF 4040 in the VPLMN in conjunction with the PCF or through unified data management (UDM) in the HPLMN. According to TS 23.501 of 3GPP, in case of roaming, messages may be sent and received between a home operator and a roaming operator through a security edge protection proxy (SEPP) tunnel. The PCF in the VPLMN directly may provide a direct interface with the PCF in the HPLMN through the corresponding tunnel. The functions of AMF/SMF/SMSF in the VPLMN may obtain and process information on roaming subscribers in the HPLMN through UDM without direct conjunction with the functions of AMF/SMF/SMSF in the HPLMN. In addition, the AMF in the VPLMN may identify and process information on subscriber authentication through the AUSF in the HPLMN. A detailed description of roaming processing in 5G will be omitted with reference to TS23.501.

The home public land mobile network (HPLMN) 4050 may directly provide subscriber information for identifying whether the corresponding UE2 4020 is a valid subscriber through the PCF, UDM, or AUSF in the HPLMN, and may directly provide whether the corresponding UE2 4020 is a valid subscriber and provides roaming services by identifying whether roaming services are available in the corresponding area. Alternatively, the home public land mobile network (HPLMN) 4050 may directly provide all or part of information regarding whether there are areas with service area restrictions and the like to the AMF 4030 in the VPLMN via the PCF in the VPMN or through the UDM or AUSF. In addition, as proposed in the present disclosure, the HPLMN 4050 may further provide information regarding whether the UE is a subscriber that requires duplication registration identification to the AMF 4030 in the VPLMN with reference to subscription information on the corresponding UE through the PCF or UDM in the HPLMN. When the AMF 4030 in the VPLMN identifies that the UE2 4020 is UE that requires duplication registration identification, the AMF 4030 in the VPLMN may identify this from the HPLMN 4050 prior to allowing access from the corresponding UE2 4020. The AMF 3030 in the VPLMN requests the PCF or UDM in the HPLMN 4050, through the PCF 4040 in the VPLMN, whether duplication registration is made. The PCF or UDM in the HPLMN 4050 may verify the duplication registration by requesting an AMF 4010 in the HPLMN whether duplication registration is made through ways such as IMEI check and paging transmit, as described above in FIGS. 2 to 3 (step 4090). As described above in FIGS. 2 to 3, when UE1 4000 with a same SUPI A value is present in the network (step 4060), the AMF 4010 in the HPLMN may receive this back from the NWDAF and/or PCF in the HPLMN 4050 and may also provide the information to the UDM.

When the AMF 4010 in the HPLMN receives a response message from UE with the same SUPI A value, the AMF 4010 may report this to an NF, such as the PCF/UDM/NWDAF in the HPLMN, to obtain a policy on how to process the duplication registration and block network access from the UE1 4000. Alternatively, the HPLMN AMF 4010 may process to block access from the UE1 4000 upon receiving a response message from the UE with the same SUPI A value (i.e., the UE2 4020), with reference to setting information on access management previously obtained from the PCF in the HPLMN (i.e., step 4120 may be performed without going through step 4110). It may be optionally processed whether the existing access is blocked in the HPLMN 4050. That is, access from new UEs with the same SUPI (e.g., the UE2 4020) is blocked by default, but optionally access from previously accessed UEs (i.e., the UE1 4000) may also be blocked.

When the AMF 4030 in the VPLMN obtains information indicating that the corresponding UE (i.e., the UE1 4000) is still registered in the network through the PCF/UDM in the HPLMN (step 4130), the AMF 4030 in the VPLMN may block access from the UE2 4020 and provide the UE2 4020 with a no access message as described above in FIGS. 2 to 3 (step 4140). In addition, although not illustrated in this drawings, the PCF 4030 in the VPLMN may provide the PCF in the HPLMN 4050 with processing information on the occurrence of the corresponding duplication registration.

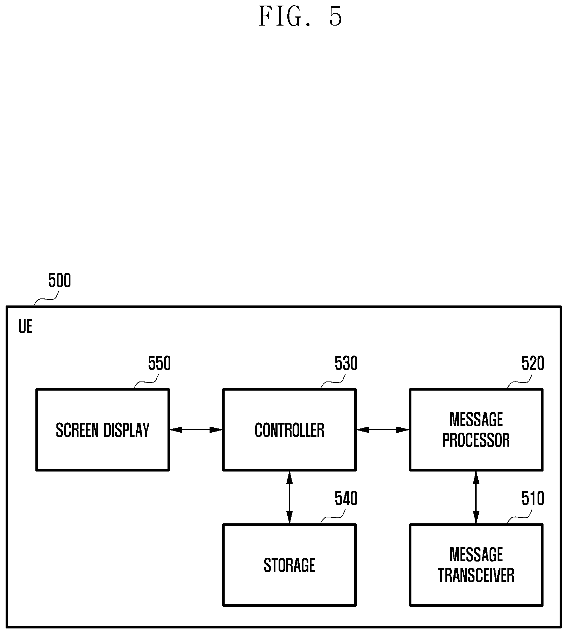

FIG. 5 is a view schematically illustrating an internal structure of UE in a wireless communication system according to an embodiment of the present disclosure.

With reference to FIG. 5, UE 500 includes a transceiver 510, a message processor 520, a controller 530, a storage 540, and a screen display 550. However, the constituent elements of the UE 500 are not limited to the examples described above. For example, a base station may include more constituent elements or fewer constituent elements than the constituent elements described above. Furthermore, at least one configuration of the UE 500 may be implemented in the form of a single chip. According to some embodiments, the transceiver 510 may perform functions for transmitting and receiving signals through a radio channel, such as band conversion and amplification of a signal. That is, the transceiver 510 may include an RF processor that up-converts a baseband signal to an RF band signal and then transmits the RF band signal through an antenna, and down-converts the RF band signal received through the antenna to a baseband signal, and may further include a transmission filter, a reception filter, an amplifier, a mixer, an oscillator, a digital to analog converter (DAC), an analog to digital converter (ADC), and the like.

In addition, the transceiver 510 may receive a signal through a radio channel, output the received signal to the controller 530, and transmit an output signal of the controller 530 through the radio channel. The transceiver 510 may perform beamforming. For beamforming, the transceiver 510 may adjust the phase and size of each of signals transmitted and received through a plurality of antennas or antenna elements. In addition, the baseband processor within the transceiver 510 may perform a conversion function between baseband signals and bit strings, according to the physical layer specifications of the system. For example, when transmitting data, the baseband processor generates complex symbols by encoding and modulating a transmission bit string. In addition, when receiving data, the baseband processor restores a reception bit string through demodulation and decryption of the baseband signal provided from the RF processor. For example, when following an orthogonal frequency division multiplexing (OFDM) method, during data transmission, the baseband processor generates complex symbols by encoding and modulating a transmitted bit string, performs mapping of the complex symbols on subcarriers, and then configures OFDM symbols through the inverse fast Fourier transform (IFFT) operation and cyclic prefix (CP) insertion.

In addition, during data reception, the baseband processor divides the baseband signal provided from the RF processor in the unit of OFDM symbols, restores the signals mapped on the subcarriers through the fast Fourier (FFT) operation, and then restores the received bit string through demodulation and decoding.

The transceiver 510 may be defined as a transceiver, and include a message transceiver. The message processor 520 may perform an operation of determining which type of message is data transmitted or received through the transceiver 510. For example, the message processor 520 may determine whether a received message is a control message of a radio resource control (RRC) layer (including a system information block (SIB)) or a data message of a user. The message processor 520 may be included in the controller 530.

The controller 530 controls overall operations of the UE 500. For example, the controller 530 transmits and receives signals through the message processor 520. In addition, the controller 530 records data to and reads from the storage 540. The controller 530 may be at least one. For example, the controller 530 may include a communication processor (CP) that performs control for communications and an application processor (AP) that controls an upper layer such as an application program. According to some embodiments, the controller 530 may determine whether to send a response back to the network according to the paging message received through the message processor 520. In addition, according to some embodiments, the controller may process a reject cause as a response message to the network access request so that the screen display 550 may display the reject cause or process an additional operation by receiving the corresponding information.

The controller 530, the message processor 520, and the transceiver 510 may control the UE 500 to perform the access to a selected operator network according to the user or UE configuration. In addition, according to some embodiments, the controller 530 may perform a process of allowing the UE to infer information, which may be referenced for service selection, by matching data records read through the storage 540 or information collected by the controller 530, the message processor 520, and the transceiver 510.

The storage 540 stores data such as a basic program, an application program, configuration information for the operation of the UE 500. In an embodiment, the storage 540 may be configured with a storage medium such as a ROM, RAM, hard disk, CD-ROM, DVD, a secure element (hardware security module), and a SIM card or a combination of storage media. In addition, the storage 540 may be integrated with the controller 530 and a system-on-chip (SoC).

A SIM card, which is an example of the storage, may include therein some or all the components in the module of the UE 500, except for the screen display 550. For example, the SIM card may include a may include a controller that stores IMSI values, which are subscriber authentication information, and performs computation and encryption/decryption for generating keys and random values to perform mutual authentication between the network and the UE based on IMSI in the network.

The screen display 550 may display information treated/processed by the controller 430. Alternatively, the screen display 550 may display a progress of an operation performed by the UE 500 through the processing of the controller 530, user consent to an event requested to be performed by the user, or the like. According to an embodiment of the present disclosure, the screen display may configure and display the grounds for blocking network access to a user as a result of the occurrence of a duplicated registration. Alternatively, the screen display may configure and display a screen to obtain user consent to allowance of a duplicate registration and the like and a menu to obtain the user's input.

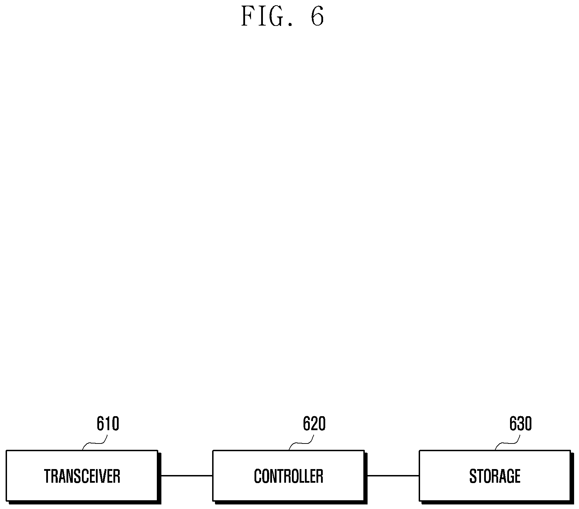

FIG. 6 is a view illustrating a structure of a network entity performing network functions according to an embodiment of the present disclosure.

The network entity in FIG. 6 may be one of the NWDAF, AMF, SMF, UPF, NSSF, AF, NEF, or OAM described above through the embodiments of the present disclosure.

With reference to FIG. 6 , the network entity for performing a network function may include a transceiver 610, a controller 620, and a storage 630. In the present disclosure, the controller may be defined as a circuit, an application specific integrated circuit (ASIC), or at least one processor.

The transceiver 610 may transmit and receive signals to and from other network entities For example, the transceiver 610 may transmit and receive signals or messages to and from the AMF, which is a network entity that manages the access to an access network and mobility of the UE.

The controller 620 may control overall operations of the network entity that performs the network functions according to the embodiments proposed in the present disclosure. For example, the controller 620 may control signal flows between the blocks to perform the operations according to the above-described flowcharts.

The storage 630 may store at least one of information transmitted and received through the transceiver 610 or information generated through the controller 620.

Meanwhile, the embodiments of the present disclosure disclosed in the present specification and illustrated in the drawings are provided as particular examples for easily explaining the technical contents the present disclosure and helping understand the present disclosure, but not intended to limit the scope of the present disclosure. That is, it is obvious to those skilled in the art to which the present disclosure pertains that other modified embodiments may be carried out based on the technical spirit of the present disclosure. In addition, the above respective embodiments may be operated in combination with each other as necessary. For example, at least some parts of the embodiments of the present disclosure may be combined with one another and operated by the base station or the UE.

The UE according to various embodiments disclosed in the present document may be an electronic device, and the electronic device may be a device having various forms. The electronic device may include, for example, a portable communication device (e.g., a smartphone), a computer device, a portable multimedia device, a portable medical device, a camera, a wearable device, or a home appliance. The electronic device according to an embodiment of the present document is not limited to the above-mentioned devices.

Various embodiments of the present document and the terms used in the embodiments are not intended to limit the technical features disclosed in the present document to the particular embodiments and should be understood as including various alterations, equivalents, or alternatives of the corresponding embodiments. In connection with the description of the drawings, the similar reference numerals may be used for the similar or relevant constituent elements. The singular form of a noun corresponding to an item may include one or plurality of the items, unless the relevant context clearly indicates otherwise. As used in the present document, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. Such terms as "1st" and "2nd," or "first" and "second" may be used to simply distinguish a corresponding constituent element from another, and does not limit the constituent elements in other aspect (e.g., importance or order). When a constituent element (e.g., a first constituent element) is referred to, with or without the term "operatively" or "communicatively," as "coupled with," "coupled to," "connected with," or "connected to" another constituent element (e.g., a second constituent element), it means that the constituent element may be coupled with the other constituent element directly (e.g., wiredly), wirelessly, or via a third constituent element.

As used in the present document, the term "module" may include a unit implemented in hardware, software, or firmware, and may be used interchangeably with terms such as logic, logic block, component, or circuit, for example. The module may be a single integral component, or a minimum unit or part thereof, adapted to perform one or more functions. For example, according to an embodiment, the module may be implemented in the form of an application-specific integrated circuit (ASIC).

Various embodiments in the present document may be implemented as software (e.g., programs) including one or more instructions are stored in a storage medium (e.g., an internal memory or an external memory) readable by a machine (e.g., an electronic device). For example, a processor of the machine (e.g., the electronic device) may invoke at least one of the one or more instructions stored in the storage medium, and execute the at least one of the one or more instructions. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments disclosed in the present disclosure may be included and provided in a computer program product. The computer program product may be traded as a product between a seller and a buyer. The computer program product may be distributed in the form of a device-readable storage medium (e.g., compact disc read only memory (CD-ROM)), or it may be distributed online (e.g., downloaded or uploaded) through an application store (e.g., Play Store^{™}) or directly between two user devices (e.g., smartphones). In case of the distribution online, at least part of the computer program product may be temporarily generated or at least temporarily stored in the machine-readable storage medium, such as memory of the manufacturer's server, a server of the application store, or a relay server.

According to various embodiments, each constituent element (e.g., module or program), among the above-mentioned constituent elements, may include a single entity or a plurality of entities. According to various embodiments, one or more constituent elements, among the above-mentioned constituent elements, or operations may be omitted, or one or more other constituent elements or operations may be added. Alternatively or additionally, a plurality of constituent elements (e.g., modules or programs) may be integrated into a single constituent element. In this case, the integrated constituent element may perform one or more functions of each of the plurality of constituent elements in the same or similar manner as they are performed by a corresponding one of the plurality of constituent elements before the integration. According to various embodiments, the operations performed by a module, program, or other constituent element may be executed sequentially, in parallel, iteratively, or heuristically, or one or more of the above operations may be executed in a different order, omitted, or one or more other operations may be added.

While the detailed description of the present disclosure has described specific embodiments, various modifications may of course be made without departing from the scope of the present disclosure. Therefore, the scope of the present disclosure should not be limited to the described embodiments, and should be defined by not only the claims to be described below, but also those equivalent to the claims.

## Claims

1. A method performed by an access management function (AMF) in a wireless communication system, the method comprising:
receiving, from second UE, a registration request including a subscription permanent identifier (SUPI);
transmitting, to first UE, a paging message related to the SUPI, the first UE being UE having the SUPI;
receiving, from the first UE, a response message in response to the paging message;
determining whether to allow an access for the second UE;
transmitting, to the second UE, a registration rejection message based on the determination; and
blocking the second UE from the access.

2. The method of claim 1, wherein the paging message includes information on a paging cause.

3. The method of claim 1, wherein the determining whether to allow the access for the second UE:
determining whether to allow abnormal access for the second UE based on information obtained through a network function (NF) by a network data analytics function (NWDAF), and
receiving the determination from a policy and control function (PCF) .

4. A method performed by first UE in a wireless communication system, the method comprising:
receiving a paging message from an access management function (AMF), the first UE being UE with a subscription permanent identifier (SUPI); and
transmitting, to the AMF, a response message in response to the paging message,
wherein a registration request including the SUPI is transmitted from second UE to the AMF,
wherein whether to allow an access for the second UE is determined based on the response message,
wherein a registration rejection message is transmitted from the AMF to the second UE based on the determination, and
wherein the access from the second UE is blocked.

5. The method of claim 4, wherein the paging message includes information on a paging cause.

6. The method of claim 4, wherein whether to allow abnormal access for the second UE is determined by a network data analytics function (NWDAF) based on information obtained through a network function (NF), and
wherein the determination is transmitted from the NWDAF to the AMF through a policy and control function (PCF).

7. A method performed by second UE in a wireless communication system, the method comprising:
transmitting, to an access management function (AMF), a network registration request including a subscription permanent identifier (SUPI); and
receiving, from the AMF, a registration rejection message,
wherein a paging message related to the SUPI is transmitted from the AMF to first UE, the first UE being UE with the SUPI,
wherein a response message for the paging message is transmitted from the first UE to the AMF,
wherein whether to allow an access for the second UE is determined based on the response message, and
wherein the access from the second UE is blocked based on the registration rejection message.

8. The method of claim 7, wherein the paging message includes information on a paging cause.

9. The method of claim 7, wherein whether to allow abnormal access for the second UE is determined by a network data analytics function (NWDAF) on information obtained through a network function (NF), and
wherein the determination is transmitted from the NWDAF to the AMF through a policy and control function (PCF).

10. An access management function (AMF), comprising:
a transceiver configured to be capable of transmitting and receiving at least one signal; and
a controller coupled to the transceiver, wherein the controller is configured to:
receive, from second UE, a registration request including a subscription permanent identifier (SUPI);
transmit, to first UE, a paging message related to the SUPI, the first UE being UE with the SUPI;
receive, from the first UE, a response message in response to the paging message;
determine whether to allow an access for the second UE;
transmit, to the second UE, a registration rejection message based on the determination; and block the access from the second UE.

11. The AMF of claim 10, wherein the paging message includes information on a paging cause.

12. A first UE, comprising:
a transceiver configured to be capable of transmitting and receiving at least one signal; and
a controller coupled to the transceiver, wherein the controller is configured to:
receive, from an access management function (AMF), a paging message, the first UE being UE with a subscription permanent identifier (SUPI), and
transmit, to the AMF, a response message in response to the paging message,
wherein a registration request including the SUPI is transmitted from the second UE to the AMF,
wherein whether to allow an access for the second UE is determined based on the response message,
wherein a registration rejection message is transmitted from the AMF to the second UE based on the determination, and
wherein the access from the second UE is blocked.

13. The first UE of claim 12, wherein the paging message includes information on a paging cause.

14. A second UE, comprising:
a transceiver configured to be capable of transmitting and receiving at least one signal; and
a controller coupled to the transceiver,wherein the controller is configured to:
transmit, to an access management function (AMF), a network registration request including a subscription permanent identifier (SUPI), and
receive, from the AMF, a registration rejection message,
wherein a paging message related to the SUPI is transmitted from the AMF to first UE, the first UE being UE with the SUPI,
wherein a response message for the paging message is transmitted from the first UE to the AMF,
wherein whether to allow an access for the second UE is determined based on the response message, and
wherein the access from the second UE is blocked based on the registration rejection message.

15. The second UE of claim 14, wherein the paging message includes information on a paging cause.
